# EUROPEAN PATENT APPLICATION

(11) **EP 4 484 046 A1**
(43) Date of publication of application: **01.01.2025**
(21) Application number: 24184753.2
(22) Date of filing: 26.06.2024
(51) Int. Cl.: B23K 11/25, G01N 29/07, G01N 29/11, G01N 29/24, G01N 29/44

(54) **WELDING INSPECTION DEVICE AND WELDING INSPECTION METHOD**

(30) Priority: 30.06.2023 JP 2023107987
(71) Applicant: DAIHEN Corporation, Yodogawa-ku Osaka-shi, Osaka 532-8512 (JP); OSAKA UNIVERSITY, Suita-shi Osaka 565-0871 (JP)
(72) Inventor: NITTA, Seiya, Osaka, 532-8512 (JP); KADOTA, Keiji, Osaka, 532-8512 (JP); ASAI, Satoru, Osaka, 565-0871 (JP); NOMURA, Kazufumi, Osaka, 565-0871 (JP)
(74) Representative: Zacco GmbH

(57) **Abstract**

A welding inspection device (1) includes: a transmission laser light irradiation device (12) that irradiates a transmission point (32) on a weld (6) with transmission laser light (14); a detection device (a reception laser source (16) and a reception laser light probe (18)) that detects an ultrasonic wave generated by the transmission laser light (14) and reaching a reception point (36) on the base material (2, 4); and a control device (22) that determines a presence or absence of an internal defect (40) in the weld (6). The control device (22) extracts, from a result of detection by the detection device (16, 18), a result of detection of a reflected wave that has been reflected by a lower surface (5) of the base material (2, 4) and has reached the reception point (36), calculates a reflected wave reaching time period using the extracted result of detection of the reflected wave, the reflected wave reaching time period being a time period during which the reflected wave travels from the transmission point (32) to the reception point (36), and determines the presence or absence of the internal defect (40) in the weld (6) based on whether or not the calculated reflected wave reaching time period is delayed with respect to a reference time period.

## Description

### BACKGROUND OF THE INVENTION

### Field of the Invention

The present disclosure relates to a welding inspection device and a welding inspection method for inspecting a weld included in a base material.

### Description of the Background Art

Japanese Patent Laying-Open No. 2023-20336 discloses a welding inspection device that inspects a weld included in a base material. The welding inspection device includes: a transmission laser irradiation device that irradiates a weld with transmission laser light for excitation of ultrasonic waves; a detection device that detects ultrasonic waves excited by the transmission laser light and reaching a reception point on the base material; and a control device that determines the presence or absence of an internal defect in the weld. The control device calculates the degree of attenuation of the intensity of a lower surface reflected wave by utilizing a phenomenon in which, among the ultrasonic waves excited by the transmission laser light, the lower surface reflected wave reflected and received by a lower surface of the base material (the surface opposite to the surface irradiated with the transmission laser light) is decreased in intensity since the path of the lower surface reflected wave is blocked by an internal defect in the weld. Then, based on the calculated degree of attenuation of the intensity of the lower surface reflected wave, the control device determines the presence or absence of an internal defect in the weld.

### SUMMARY OF THE INVENTION

While the degree of attenuation of the intensity of the lower surface reflected wave depends on the intensity of the ultrasonic signal detected by the detection device, it is considered that the intensity of the ultrasonic signal varies under the influence of various elements (for example, properties of a surface irradiated with transmission laser light, electrical noise occurring during arithmetic processing of an ultrasonic signal, and the like) other than the internal defect. Thus, the presence or absence of an internal defect may be erroneously determined when this determination is made based on the degree of attenuation of the intensity of the lower surface reflected wave as in the welding inspection device disclosed in the above-mentioned Japanese Patent Laying-Open No. 2023-20336.

Therefore, an object of the present disclosure is to accurately determine the presence or absence of an internal defect in a weld.

### (Clause 1)

A welding inspection device according to the present disclosure is a welding inspection device that inspects a weld included in a base material. The welding inspection device includes: a first irradiation device that irradiates a transmission point on the weld with transmission laser light; a detection device that detects an ultrasonic wave generated by the transmission laser light and reaching a reception point on the base material; and a control device that determines a presence or absence of an internal defect in the weld. The control device extracts, from a result of detection by the detection device, a result of detection of a reflected wave that has been reflected by a lower surface of the base material and has reached the reception point, calculates a reflected wave reaching time period using the extracted result of detection of the reflected wave, the reflected wave reaching time period being a time period during which the reflected wave travels from the transmission point to the reception point, and determines the presence or absence of the internal defect in the weld based on whether or not the calculated reflected wave reaching time period is delayed with respect to a reference time period.

### (Clause 2)

In the welding inspection device according to Clause 1, the reference time period corresponds to the reflected wave reaching time period in a case where the internal defect is not present in the weld.

### (Clause 3)

In the welding inspection device according to Clause 1, the control device calculates an index value indicating a degree of delay of the calculated reflected wave reaching time period with respect to the reference time period, and, when the calculated index value is larger than a threshold value, determines that the internal defect is present.

### (Clause 4)

In the welding inspection device according to Clause 3, the control device stores the reference time period and the threshold value in advance.

### (Clause 5)

In the welding inspection device according to Clause 3, the control device acquires the reference time period and the threshold value from outside, the reference time period and the threshold value being determined by an experiment or an analysis.

### (Clause 6)

In the welding inspection device according to any one of Clause 1 to 5, the control device determines the presence or absence of the internal defect not only based on whether or not the reflected wave reaching time period is delayed with respect to the reference time period but also based on a degree of attenuation of the reflected wave that has been extracted.

### (Clause 7)

In the welding inspection device according to any one of Clause 1 to 5, the detection device includes: a second irradiation device that irradiates the reception point with reception laser light for detecting an ultrasonic wave; and a laser interferometer that measures interference of reflected light of the reception laser light.

### (Clause 8)

A welding inspection method according to the present disclosure is a welding inspection method of inspecting a weld included in a base material. The welding inspection method includes: irradiating a transmission point on the weld with transmission laser light; detecting an ultrasonic wave generated by the transmission laser light and reaching a reception point on the base material; from a result of detection by the detecting an ultrasonic wave, extracting a result of detection of a reflected wave that has been reflected by a lower surface of the base material and has reached the reception point; calculating a reflected wave reaching time period using the extracted result of detection of the reflected wave, the reflected wave reaching time period being a time period during which the reflected wave travels from the transmission point to the reception point; and determining a presence or absence of an internal defect in the weld based on whether or not the calculated reflected wave reaching time period is delayed with respect to a reference time period.

The foregoing and other objects, features, aspects, and advantages of the present invention will become apparent from the following detailed description of the present invention, which is understood in conjunction with the accompanying drawings.

### BRIEF DESCRIPTION OF THE DRAWINGS

Fig. 1 is a diagram showing a configuration of a welding inspection device.
Fig. 2 is a diagram showing a state in which no internal defect is present in a weld.
Fig. 3 is a graph showing a relation between a transmission position of an ultrasonic wave and an ultrasonic wave reaching time period in a case where no internal defect is present in the weld.
Fig. 4 is a diagram showing a state in which an internal defect is present in the weld.
Fig. 5 is a graph showing a relation between the transmission position of an ultrasonic wave and the ultrasonic wave reaching time period in a case where an internal defect is present in the weld.
Fig. 6 is a flowchart (No. 1) illustrating an example of a processing procedure of a control device.
Fig. 7 is a graph showing a relation between the transmission position of an ultrasonic wave and intensity of a lower surface reflected wave.
Fig. 8 is a flowchart (No. 2) illustrating an example of the processing procedure of the control device.

### DESCRIPTION OF THE PREFERRED EMBODIMENTS

Embodiments of the present disclosure will be hereinafter described in detail with reference to the accompanying drawings, in which the same or corresponding portions are denoted by the same reference characters, and the description thereof will not be repeated.

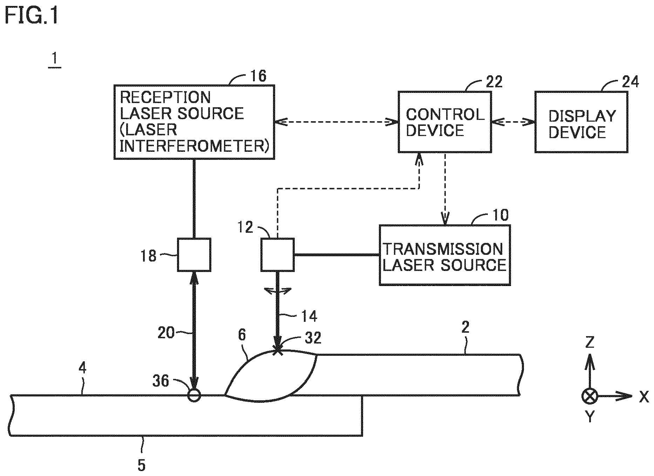

Fig. 1 is a diagram showing a configuration of a welding inspection device 1 according to the present embodiment. Referring to Fig. 1, welding inspection device 1 includes a transmission laser source 10, a transmission laser light irradiation device (a first irradiation device) 12, a reception laser source 16, a reception laser light probe (a second irradiation device) 18, a control device 22, and a display device 24.

Welding inspection device 1 is used, for example, to inspect a weld (weld bead) 6 in lap fillet joint of base materials 2 and 4 each having a thin plate shape. Base materials 2 and 4 are, for example, galvanized steel sheets each having a thickness of about 1 mm to 2 mm. In the figures, a Y-direction indicates a direction in which welding proceeds (in a direction in which the weld bead extends), a Z-direction indicates a direction normal to base materials 2 and 4, and an X-direction indicates a direction orthogonal to the Y-direction and the Z-direction.

Transmission laser source 10 generates excitation light for generating transmission laser light 14 in transmission laser light irradiation device 12, and outputs the generated excitation light to transmission laser light irradiation device 12. Transmission laser source 10 is configured, for example, of a laser diode (LD) power supply.

Transmission laser light irradiation device 12 receives excitation light from transmission laser source 10, generates transmission laser light 14 that is pulsed laser light, and irradiates weld 6 as an inspection target with the generated transmission laser light 14. Transmission laser light irradiation device 12 is configured to include, for example, a microchip laser that generates yttrium aluminum garnet (YAG) pulsed laser light and a scanning mechanism capable of scanning the irradiation position of transmission laser light 14 in the X-direction. The scanning mechanism is configured to include, for example, a galvano mirror whose angle can be adjusted and a drive mechanism that drives the galvano mirror.

Reception laser source 16 is configured to include a laser interferometer. Reception laser source 16 generates reception laser light 20 (reference light) to be applied to base material 4 in a lower plate, and outputs the generated reception laser light 20 to reception laser light probe 18. Further, from reception laser light probe 18, reception laser source 16 receives the reflected light of reception laser light 20 that has been applied to and reflected from base material 4. Then, reception laser source 16 detects interference light including the reference light and the reflected light, and outputs the detected interference light to control device 22.

Reception laser light probe 18 applies reception laser light 20 to a predetermined reception point 36 on base material 4 of the lower plate. Further, reception laser light probe 18 receives the reflected light of reception laser light 20 that has been applied to and reflected from base material 4. Then, reception laser light probe 18 outputs the received light to reception laser source 16 (a laser interferometer).

Welding inspection device 1 detects an internal defect in weld 6 by a laser ultrasonic method. Specifically, transmission laser light 14 is applied to a transmission point 32 on weld 6 as an inspection target to generate ultrasonic waves inside the inspection target. Then, the surface vibration according to the intensity of the ultrasonic wave at reception point 36 on base material 4 irradiated with reception laser light 20 is detected by the interference light of the reference light and the reflected light of reception laser light 20. Then, the presence or absence of the internal defect in weld 6 is determined based on the detection difference between the case where no internal defect is present in weld 6 and the case where an internal defect is present in weld 6.

Control device 22 is configured to include a central processing unit (CPU), a memory (a random access memory (RAM) and a read only memory (ROM)), and an input/output port through which various signals are input and output (none of them is shown). The CPU deploys a program stored in the ROM on the RAM and executes the program. Various types of processes to be executed by control device 22 are described in the program stored in the ROM.

Control device 22 controls transmission laser source 10 so as to generate excitation light for generating transmission laser light 14 in transmission laser light irradiation device 12. Further, control device 22 controls transmission laser light irradiation device 12 such that the irradiation position of transmission laser light 14 is scanned in the X-direction. Further, from transmission laser light irradiation device 12, control device 22 receives the timing of oscillation (the timing of pulse irradiation) of transmission laser light 14 in transmission laser light irradiation device 12.

Then, from reception laser source 16, control device 22 receives the result of measurement of the interference of reception laser light 20 by the laser interferometer of reception laser source 16, and determines the presence or absence of an internal defect in weld 6 based on the detection signal of the ultrasonic wave at reception point 36 on base material 4. A method of determining the presence or absence of an internal defect in weld 6 will be described later in detail.

Display device 24 serves as a display for displaying results of various processes performed by control device 22. Display device 24 displays, for example, a measurement screen called a B-scope showing a result of measurement of ultrasonic waves in the inspection target by welding inspection device 1. The B-scope represents the distribution of the intensities of the ultrasonic waves having reached reception point 36, assuming that the horizontal axis represents a position of transmission point 32 in the X-direction as a position irradiated with transmission laser light 14 on weld 6, and the vertical axis represents a time period until the ultrasonic wave generated at transmission point 32 by irradiation with transmission laser light 14 reaches reception point 36 on base material 4 (this time period will be hereinafter also referred to as an "ultrasonic wave reaching time period"). Control device 22 and display device 24 each are configured, for example, of a personal computer (PC).

### <Method of Determining Presence or Absence of Internal Defect in Weld>

The following specifically describes a method of determining the presence or absence of an internal defect in weld 6 by welding inspection device 1.

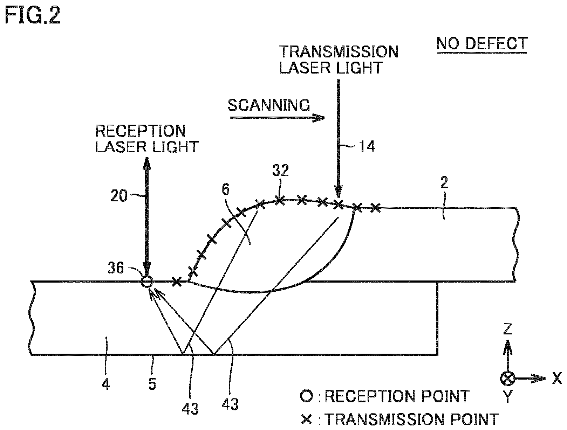

Figs. 2 to 5 each are a diagram for illustrating a principle of detection of an internal defect in weld 6 by welding inspection device 1.

Fig. 2 is a diagram showing the state in which no internal defect is present in weld 6. In welding inspection device 1, a region including weld 6 is irradiated with transmission laser light 14 (pulsed laser light) from above (in the Z-direction), so that an ultrasonic wave is generated at transmission point 32. The ultrasonic wave generated at transmission point 32 passes through weld 6, is reflected by a lower surface 5 of base material 4 on the lower side, and then reaches reception point 36 on base material 4. Then, the ultrasonic wave reflected at lower surface 5 and reaching reception point 36 (hereinafter also referred to as a "lower surface reflected wave") causes micro-vibrations at reception point 36 on base material 4. These micro-vibrations are measured with the use of reception laser light 20, and thereby, the lower surface reflected wave at reception point 36 is detected.

Transmission point 32 indicated by "×" mark is scanned in the X-direction using the scanning mechanism of transmission laser light irradiation device 12 (Fig. 1). After the measurement at a certain transmission point 32 ends, the scanning at the position irradiated with transmission laser light 14 is shifted to the next position, and the measurement at the next transmission point 32 is performed.

Reception point 36 indicated by "o" mark is fixed in the X-direction on base material 4. As the distance in the X-direction between transmission point 32 and reception point 36 is longer, the distance of propagation of the ultrasonic wave from transmission point 32 to reception point 36 is longer, and the intensity of the ultrasonic wave (micro-vibrations on the surface) at reception point 36 also becomes lower due to diffusion attenuation.

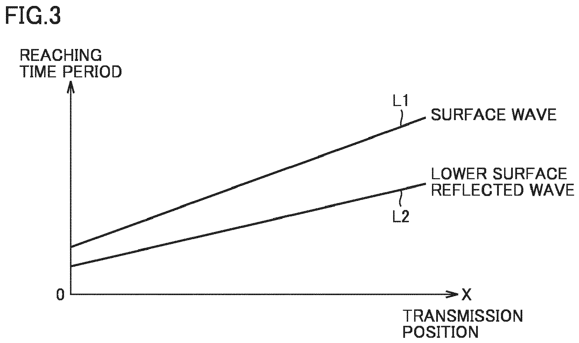

Fig. 3 is a graph showing the relation between the transmission position of an ultrasonic wave (the position of transmission point 32 in the X-direction) and the ultrasonic wave reaching time period (the time period until the ultrasonic wave generated at transmission point 32 reaches reception point 36), the relation being established at the time when no internal defect is present in weld 6. In Fig. 3, the horizontal axis represents the transmission position of the ultrasonic wave, in which a larger value indicates a longer distance from transmission point 32 to reception point 36. The vertical axis represents the ultrasonic wave reaching time period.

The ultrasonic waves detected at reception point 36 include, in addition to the above-mentioned lower surface reflected wave, a surface wave emitted from transmission point 32, passing through the surface layers of weld 6 and base material 4, and then reaching reception point 36. Since the lower surface reflected wave is longer in propagation path to reception point 36 than the surface wave, the reaching time period of the lower surface reflected wave is longer than that of the surface wave. Using this phenomenon makes it possible to distinguish whether the ultrasonic wave detected at reception point 36 is a surface wave or a lower surface reflected wave.

The graph in Fig. 3 shows the B-scope for each of lines L1 and L2 with the concentration changed in accordance with the intensity of the ultrasonic wave at reception point 36 at each transmission position of the ultrasonic wave. In the B-scope, the ultrasonic wave reaching time period and the ultrasonic wave intensity are displayed on one screen at each transmission position of the ultrasonic wave.

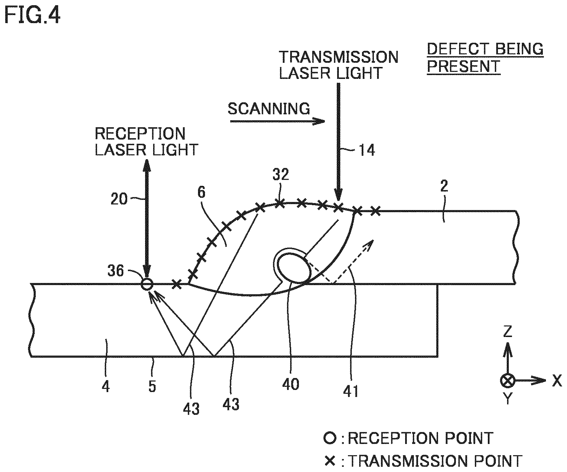

Fig. 4 is a diagram showing the state in which an internal defect 40 such as a blowhole is present in weld 6. When internal defect 40 such as a blowhole is present in weld 6, the ultrasonic wave generated at transmission point 32 is divided into a scattered wave component 41 and a diffracted wave component 43 depending on the transmission position. In this case, scattered wave component 41 whose path is blocked by internal defect 40 is reflected by internal defect 40 and scattered without reaching reception point 36. Diffracted wave component 43 is diffracted by internal defect 40 while it travels. In this case, diffracted wave component 43 is reflected by lower surface 5 of base material 4 and reaches reception point 36, and the distance of propagation of diffracted wave component 43 is longer by the amount of diffraction than that in the case where no internal defect 40 is present. As a result, assuming that a "reference time period" denotes the time period corresponding to the reaching time period of the lower surface reflected wave in the case where no internal defect 40 is present, the reaching time period of diffracted wave component 43 is delayed with respect to the reference time period.

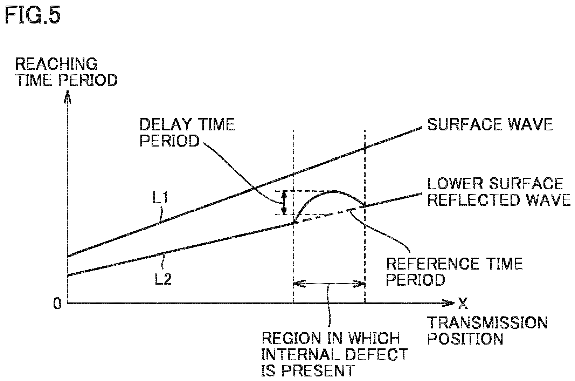

Fig. 5 is a graph showing the relation between the transmission position of an ultrasonic wave and the ultrasonic wave reaching time period in a case where an internal defect such as a blowhole is present in weld 6. When an internal defect such as a blowhole is present in weld 6, the transmission position includes a region in which an internal defect is present (a region in which the above-mentioned diffracted wave component 43 reaches reception point 36). In this region, the reaching time period of diffracted wave component 43 is the same as the reaching time period of the lower surface reflected wave, with the result that the reaching time period of the lower surface reflected wave is longer than the reference time period. As shown in Fig. 5, a delay time period of the reaching time period of diffracted wave component 43 with respect to the reference time period is recognized as a distribution in which only a part of the lower surface reflected wave shifts to the longer time period side with respect to the reference time period on the B-scope.

In view of such a phenomenon, control device 22 according to the present embodiment extracts the result of detection of the lower surface reflected wave from the result of detection of the ultrasonic wave at reception point 36, calculates the reaching time period of the lower surface reflected wave based on the extracted result of detection of the lower surface reflected wave, and determines the presence or absence of internal defect 40 in weld 6 based on the result of evaluation as to whether or not the calculated reaching time period of the lower surface reflected wave is delayed with respect to the reference time period.

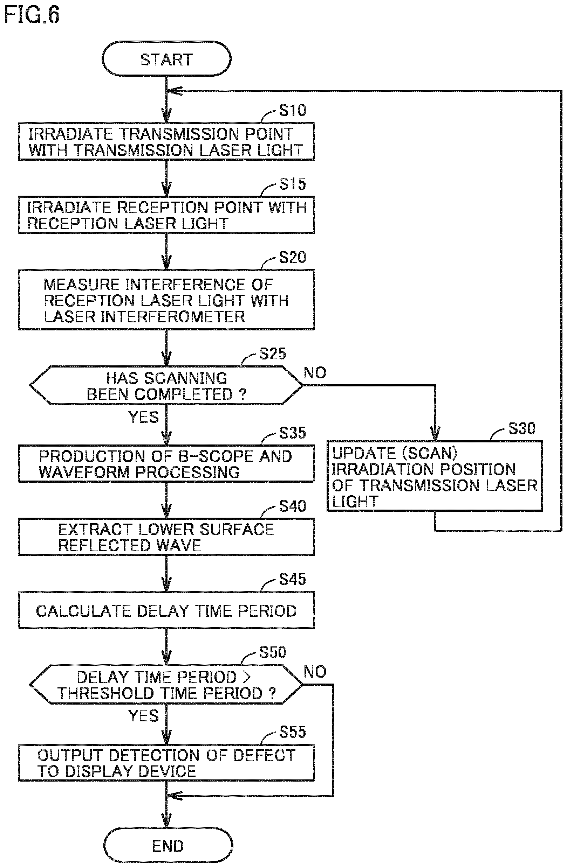

Fig. 6 is a flowchart illustrating an example of a processing procedure of control device 22 according to the present embodiment.

Control device 22 controls the scanning mechanism of transmission laser light irradiation device 12 so as to irradiate the above-mentioned transmission point 32 with transmission laser light 14 (step S10). The number of irradiation points (the number of transmission points) and the irradiation position (the transmission position) of transmission laser light 14 in scanning for one line in the X-direction are determined in advance. In the case of the first irradiation with the transmission laser light, the scanning mechanism is controlled, for example, such that among the plurality of transmission points 32, a transmission point 32 located closest to reception point 36 is irradiated with transmission laser light 14.

Then, control device 22 controls reception laser source 16 such that reception point 36 is irradiated with reception laser light 20 (step S15). The position of reception point 36 in the X-direction is fixed in advance. The irradiation with reception laser light 20 may be performed before the irradiation with transmission laser light 14, or may be started simultaneously with the start of the irradiation with transmission laser light 14.

Then, control device 22 uses the laser interferometer of reception laser source 16 to measure the interference of the reflected light of reception laser light 20 applied to base material 4; and reception laser light 20 (reference light) applied to base material 4 (step S20).

Then, control device 22 determines whether or not scanning for one line of transmission laser light 14 has been completed (step S25). Specifically, it is determined whether or not the measurement has been completed at all of the predetermined irradiation positions in the scanning for one line in the X-direction.

When the scanning for one line has not been completed (NO in step S25), control device 22 updates the irradiation position of transmission laser light 14 so as to shift to the next position (step S30). Then, the process returns to step S10, and the process in steps S10 to S30 is repeated until scanning for one line is completed.

When it is determined that the scanning for one line has been completed (YES in step S25), control device 22 produces a B-scope and executes waveform processing (step S35). Specifically, for the measurement signal for one line scanning obtained in the process in steps S10 to S30, control device 22 produces a B-scope indicating the relation between: each irradiation position (transmission position) of transmission laser light 14 in the X-direction; and the reaching time period and the intensity of the ultrasonic wave at the irradiation position (reception point) of reception laser light 20.

Then, control device 22 extracts the signal of the lower surface reflected wave from the produced B-scope (step S40). As described above, in the B-scope, the lower surface reflected wave can be easily distinguished and extracted from the surface wave and the like. This extraction operation can be automatically performed in control device 22.

Then, for the signal of the extracted lower surface reflected wave, control device 22 calculates the delay time period of the reaching time period of the lower surface reflected wave with respect to the reference time period (which will be hereinafter also simply referred to as a "delay time period of the lower surface reflected wave") (step S45). As described above, the reference time period corresponds to the reaching time period of the lower surface reflected wave in the case where no internal defect 40 is present in weld 6.

In the present embodiment, the reference time period is determined at each transmission position by a preliminary evaluation test, theoretical calculation or the like, and stored in advance in an internal memory of control device 22. Control device 22 reads the reference time period stored in the memory, calculates the difference between the reaching time period of the lower surface reflected wave and the reference time period at each transmission position, and calculates the maximum value of the difference between the reaching time period of the lower surface reflected wave and the reference time period as the delay time period of the lower surface reflected wave.

Note that the reference time period is not necessarily stored in advance in the internal memory of control device 22. For example, from an external device, control device 22 may acquire the reference time period determined in advance by a preliminary test or analysis at each transmission position.

Then, control device 22 determines whether or not the delay time period of the lower surface reflected wave calculated in step S40 is longer than a threshold time period (step S50). By a preliminary evaluation test, theoretical calculation, or the like, the threshold time period is set as appropriate at a value by which the presence or absence of an internal defect can be distinguished at each transmission position. Similarly to the reference time period, the threshold time period may be stored in advance in the internal memory of control device 22 or may be acquired from an external device. When it is determined that the delay time period of the lower surface reflected wave is longer than the threshold time period (YES in step S50), control device 22 outputs, to display device 24, a signal indicating that an internal defect has been detected in weld 6 (step S55).

As described above, control device 22 according to the present embodiment extracts the detection signal of the lower surface reflected wave from the result of detection of the ultrasonic wave at reception point 36, calculates the reaching time period of the lower surface reflected wave with the use of the extracted detection signal of the lower surface reflected wave, and determines the presence or absence of internal defect 40 in weld 6 based on the result of evaluation as to whether or not the calculated reaching time period of the lower surface reflected wave is delayed with respect to the reference time period.

In other words, control device 22 according to the present embodiment determines the presence or absence of internal defect 40 not based on the degree of attenuation of the intensity of the lower surface reflected wave but based on the delay time period of the lower surface reflected wave. Thus, even if the intensity of the lower surface reflected wave varies due to the influence of an element (electrical noise or the like) other than the presence or absence of internal defect 40, the presence or absence of internal defect 40 still can be accurately determined.

### <First Modification>

In the above-described embodiment, the presence or absence of internal defect 40 is determined based on the delay time period of the lower surface reflected wave, but the physical quantity used for determining the presence or absence of internal defect 40 may be any physical quantity indicating the degree of delay of the reaching time period of the lower surface reflected wave with respect to the reference time period and is not necessarily limited to the "delay time period of the lower surface reflected wave". In other word, control device 22 may calculate an index value indicating the degree of delay of the reaching time period of the lower surface reflected wave with respect to the reference time period, and determine that internal defect 40 is present when the calculated index value is larger than the threshold value.

### <Second Modification>

In the above-described embodiment, the presence or absence of internal defect 40 is determined based on the delay time period of the lower surface reflected wave. In order to more accurately determine the presence or absence of internal defect 40, the presence or absence of internal defect 40 may be determined based on the degree of attenuation of the intensity of the lower surface reflected wave in addition to the delay time period of the lower surface reflected wave.

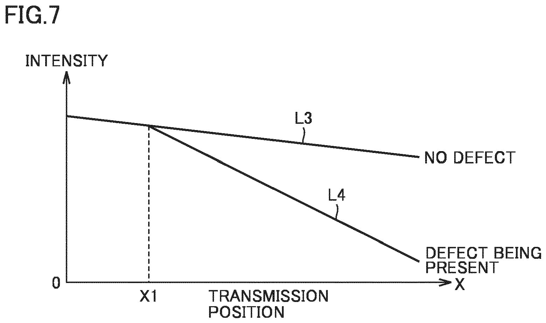

Fig. 7 is a graph showing the relation between the transmission position of an ultrasonic wave and the intensity of the lower surface reflected wave. In Fig. 7, the horizontal axis represents the transmission position of the ultrasonic wave (the position of transmission point 32 in the X-direction), and the vertical axis represents the intensity of the lower surface reflected wave at reception point 36.

A line L3 indicates the intensity of the lower surface reflected wave in the case where no internal defect is present in weld 6. As to the intensity of the lower surface reflected wave, the signal intensity is attenuated more by diffusion attenuation as the value of the transmission position of the ultrasonic wave is larger (as the position of transmission point 32 in the X-direction is farther from reception point 36).

A line L4 indicates the intensity of the lower surface reflected wave in the case where an internal defect (such as a blowhole) is present in weld 6. In the case where the transmission position of an ultrasonic wave is located at a position larger than X1, an internal defect occurs in weld 6. In the case where an internal defect occurs, the scattering attenuation also occurs at the internal defect in addition to the diffusion attenuation, as described above with reference to Fig. 4. Thus, the intensity of the lower surface reflected wave at reception point 36 is lower than that in the case where no internal defect is present (line L3). In other words, the degree of attenuation of the intensity of the lower surface reflected wave is higher in the case where an internal defect is present than in the case where no internal defect is present.

In view of such a phenomenon, the presence or absence of internal defect 40 may be determined based on the degree of attenuation of the intensity of the lower surface reflected wave in addition to the delay time period of the lower surface reflected wave.

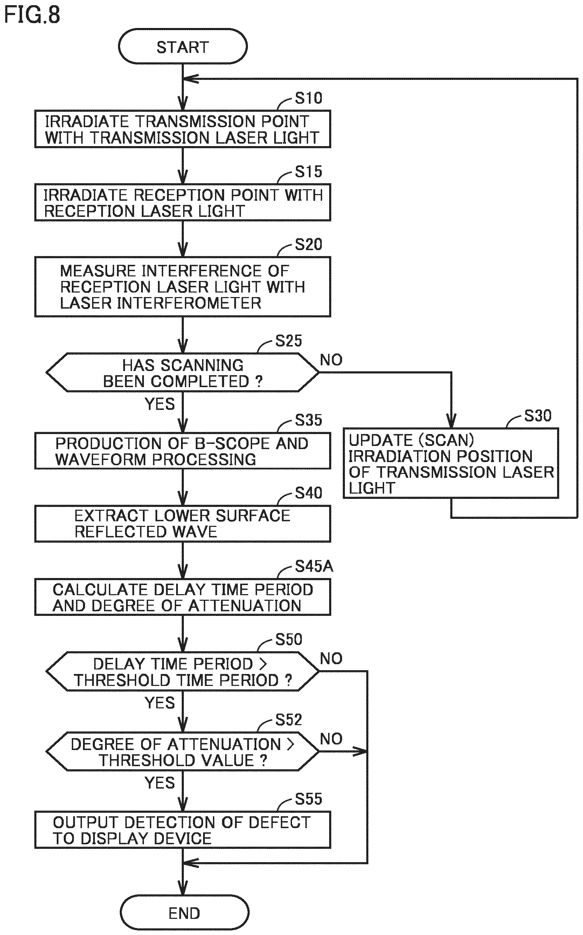

Fig. 8 is a flowchart illustrating an example of the processing procedure of control device 22 according to the present second modification. The flowchart in Fig. 8 is obtained by replacing step S45 in the above-described flowchart in Fig. 6 with step S45A, and further adding step S52 to the above-described flowchart in Fig. 6. Since other steps in the flowchart in Fig. 8 (steps having the same numbers as those of the steps shown in Fig. 6) have already been described, the detailed description thereof will not be repeated in the following.

For the extracted signal of the lower surface reflected wave, control device 22 calculates the degree of attenuation of the intensity of the lower surface reflected wave in addition to the above-mentioned delay time period of the lower surface reflected wave (step S45A). Specifically, control device 22 calculates the degree of decrease in the intensity of the ultrasonic wave according to the transmission position. Note that control device 22 may calculate a root mean square (RMS) value of the signal intensity with respect to the measurement signal obtained at each transmission position, and calculate the degree of decrease in the RMS value according to the transmission position.

Then, when it is determined that the delay time period of the lower surface reflected wave is longer than the threshold time period (YES in step S50), control device 22 determines whether or not the degree of attenuation of the intensity of the lower surface reflected wave is greater than the threshold value (step S52). By an evaluation test or the like conducted in advance, the threshold value is set as appropriate at a value by which the presence or absence of an internal defect can be distinguished.

Then, when it is determined that the delay time period of the lower surface reflected wave is longer than the threshold time period (YES in step S50) and it is determined that the degree of attenuation of the intensity of the lower surface reflected wave is greater than the threshold value (YES in step S52), then, control device 22 outputs, to display device 24, a signal indicating that an internal defect has been detected in weld 6 (step S55).

As described above, by determining the presence or absence of internal defect 40 by using both the delay time period of the lower surface reflected wave and the degree of attenuation of the intensity of the lower surface reflected wave in this way, the presence or absence of internal defect 40 can be more accurately determined.

Although the embodiments of the present invention have been described, it should be understood that the embodiments disclosed herein are illustrative and not restrictive in every respect. The scope of the present invention is defined by the scope of the claims, and is intended to include any modifications within the meaning and scope equivalent to the terms of the claims.

## Claims

1. A welding inspection device (1) that inspects a weld (6) included in a base material (2, 4), the welding inspection device (1) comprising:
a first irradiation device (12) that irradiates a transmission point (32) on the weld (6) with transmission laser light (14);
a detection device (16, 18) that detects an ultrasonic wave generated by the transmission laser light (14) and reaching a reception point (36) on the base material (2, 4); and
a control device (22) that determines a presence or absence of an internal defect (40) in the weld (6), wherein
the control device (22)
extracts, from a result of detection by the detection device (16, 18), a result of detection of a reflected wave that has been reflected by a lower surface (5) of the base material (2, 4) and has reached the reception point (36),
calculates a reflected wave reaching time period using the extracted result of detection of the reflected wave, the reflected wave reaching time period being a time period during which the reflected wave travels from the transmission point (32) to the reception point (36), and
determines the presence or absence of the internal defect (40) in the weld (6) based on whether or not the calculated reflected wave reaching time period is delayed with respect to a reference time period.

2. The welding inspection device (1) according to claim 1, wherein the reference time period corresponds to the reflected wave reaching time period in a case where the internal defect (40) is not present in the weld (6).

3. The welding inspection device (1) according to claim 1, wherein
the control device (22)
calculates an index value indicating a degree of delay of the calculated reflected wave reaching time period with respect to the reference time period, and
when the calculated index value is larger than a threshold value, determines that the internal defect (40) is present.

4. The welding inspection device (1) according to claim 3, wherein the control device (22) stores the reference time period and the threshold value in advance.

5. The welding inspection device (1) according to claim 3, wherein the control device (22) acquires the reference time period and the threshold value from outside, the reference time period and the threshold value being determined by an experiment or an analysis.

6. The welding inspection device (1) according to any one of claims 1 to 5, wherein the control device (22) determines the presence or absence of the internal defect (40) not only based on whether or not the reflected wave reaching time period is delayed with respect to the reference time period, but also based on a degree of attenuation of the reflected wave that has been extracted.

7. The welding inspection device (1) according to any one of claims 1 to 5, wherein
the detection device (16, 18) includes
a second irradiation device (18) that irradiates the reception point (36) with reception laser light for detecting an ultrasonic wave, and
a laser interferometer (16) that measures interference of reflected light of the reception laser light.

8. A welding inspection method of inspecting a weld (6) included in a base material (2, 4), the welding inspection method comprising:
irradiating a transmission point (32) on the weld (6) with transmission laser light (14);
detecting an ultrasonic wave generated by the transmission laser light (14) and reaching a reception point (36) on the base material (2, 4);
from a result of detection by the detecting an ultrasonic wave, extracting a result of detection of a reflected wave that has been reflected by a lower surface (5) of the base material (2, 4) and has reached the reception point (36);
calculating a reflected wave reaching time period using the extracted result of detection of the reflected wave, the reflected wave reaching time period being a time period during which the reflected wave travels from the transmission point (32) to the reception point (36); and
determining a presence or absence of an internal defect (40) in the weld (6) based on whether or not the calculated reflected wave reaching time period is delayed with respect to a reference time period.
